(19) Europäisches Patentamt
European Patent Office
Office européen des brevets

(11) **EP 4 651 257 A1**

(12) **EUROPEAN PATENT APPLICATION**
published in accordance with Art. 153(4) EPC

(43) Date of publication:
**19.11.2025 Bulletin 2025/47**

(21) Application number: **24877382.2**

(22) Date of filing: **13.08.2024**

(51) International Patent Classification (IPC):
$H01M\ 10/0585^{(2010.01)}$  $H01M\ 4/13^{(2010.01)}$
$H01M\ 4/62^{(2006.01)}$  $H01M\ 4/38^{(2006.01)}$
$H01M\ 4/40^{(2006.01)}$  $H01M\ 10/0562^{(2010.01)}$
$H01M\ 10/42^{(2006.01)}$  $H01M\ 4/02^{(2006.01)}$

(52) Cooperative Patent Classification (CPC):
**H01M 4/02; H01M 4/13; H01M 4/38; H01M 4/40;
H01M 4/62; H01M 10/0562; H01M 10/0585;
H01M 10/42; Y02E 60/10**

(86) International application number:
**PCT/KR2024/012072**

(87) International publication number:
**WO 2025/079843 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.10.2023 KR 20230134367**

(71) Applicant: **LG Energy Solution, Ltd.
Seoul 07335 (KR)**

(72) Inventors:
• **CHOI, Ran
  Daejeon 34122 (KR)**
• **LEE, Hye Jin
  Daejeon 34122 (KR)**
• **YOM, Jee Ho
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ANODELESS COATING LAYER AND ALL-SOLID-STATE BATTERY COMPRISING SAME**

(57) The present invention relates to: an anodeless coating layer containing a first amorphous carbon and a second amorphous carbon and having a $D_{50}/D_{10}$ in the range of 3.5-10 according to a particle size analysis result obtained by a particle size analyzer (Mastersizer 3000), and an all-solid-state battery comprising same. According to the present invention, it is possible to provide an anodeless coating layer having improved performance, stability, and/or lifespan characteristics, and an all-solid-state battery comprising same.

Fig. 1

## Description

### Technical Field

This application claims the benefit of priority on the basis of Korean Patent Application No. 2023-0134367, filed on 10/10/2023, and the entire contents disclosed in the Korean Patent Application are incorporated herein as a part of the specification. The disclosure relates to an anodeless coating layer and an all-solid-state battery including the same.

### Background Art

All-solid-state batteries exhibiting high energy density and stability have been suggested in response to emerging industrial demands, and continuous efforts are being made to further enhance these characteristics. For example, methods for using lithium as a negative electrode active material are being explored to increase the energy density of all-solid-state batteries.

The methods for using lithium as a negative electrode active material have been introduced, including either a method for using lithium or a lithium alloy as a negative electrode active material layer in the manufacture of batteries, or a method for forming a lithium layer during charging without forming a separate negative electrode active material layer on a negative electrode current collector in the manufacture of batteries.

However, when lithium is used as a negative electrode active material, lithium (metallic lithium) is deposited on a negative electrode side during charging, and lithium dendrites grow through gaps in a solid electrolyte layer during repeated charging and discharging, causing battery short circuits or capacity degradation.

Accordingly, there is a need to address the limitations described above to enable the practical use of the methods for using lithium as a negative electrode active material.

### Disclosure of Invention

#### Technical Goals

The present disclosure is designed to address the issues described above and thus an aspect provides an anodeless coating layer exhibiting enhanced performance, stability, and/or lifespan characteristics, and an all-solid-state battery including the same.

#### Technical solutions

According to an aspect of the present disclosure, there is provided an anodeless coating layer including a first amorphous carbon and a second amorphous carbon, and having a $D_{50}/D_{10}$ of 3.5 to 10 as indicated by particle size analysis using a particle size analyzer (Mastersizer 3000).

In an embodiment, the anodeless coating layer may have a $D_{10}$ of 0.06 micrometers ($\mu$m) or less.

In an embodiment, the anodeless coating layer may have a $D_{10}$ of 0.03 $\mu$m or greater.

In an embodiment, the anodeless coating layer may have two peaks between 0.1 $\mu$m and 0.5 $\mu$m in a graph with an x-axis ($\mu$m) for size and a y-axis (%) for volume density, derived from particle size analysis using a particle size analyzer (Mastersizer 3000), and satisfying Equation 1 below.

$$[\text{Equation 1}]$$

$$1.0 \leq (x_2 - x_1)/x_1 * (y_1/y_2) \leq 2.0$$

In Equation 1 above, $x_1$ and $x_2$ may be x-axis values of the two peaks, respectively, such that $x_1 < x_2$, $y_1$ may be a y-axis value of peak $x_1$, and $y_2$ may be a y-axis value of peak $x_2$.

In an embodiment, a ratio of an average primary particle size of the first amorphous carbon to an average primary particle size of the second amorphous carbon may be in a range of 1.1 to 3.3, and a weight ratio of the first amorphous carbon to the second amorphous carbon may be in a range of 5 to 20.

In an embodiment, the first amorphous carbon may have an average primary particle size of 30 to 50 nanometers (nm).

In an embodiment, the second amorphous carbon may have an average primary particle size of 15 to 25 nm.

In an embodiment, the first amorphous carbon may have a specific surface area of 10 to 100 square meters per gram ($m^2/g$).

In an embodiment, the second amorphous carbon may have a specific surface area of 110 to 230 $m^2/g$.

In an embodiment, the first amorphous carbon and the second amorphous carbon may each independently be at least one selected from the group consisting of carbon black, acetylene black, furnace black, Ketjen black, and graphene.

In an embodiment, the anodeless coating layer may further include metals, metalloid elements, or combinations thereof that form alloys or compounds with lithium.

In an embodiment, the metals, metalloid elements, or combinations thereof that form alloys or compounds with lithium may be at least one selected from the group consisting of gold (Au), platinum (Pt), palladium (Pd), silicon (Si), silver (Ag), aluminum (Al), bismuth (Bi), tin (Sn) and zinc (Zn).

In an embodiment, a weight ratio of a sum of the first amorphous carbon and the second amorphous carbon to the metals, metalloid elements, or combinations thereof that form alloys or compounds with lithium may be in a range of 1 to 10.

In an embodiment, the anodeless coating layer may further include a binder.

In an embodiment, a weight ratio of a sum of the first amorphous carbon, the second amorphous carbon, and the metals, metalloid elements, or combinations thereof that form alloys or compounds with lithium to the binder may be in a range of 5 to 50.

According to another aspect of the present disclosure, there is also provided an all-solid-state battery including a positive electrode, a solid electrolyte layer, an anodeless coating layer, and a negative electrode. The anodeless coating layer includes a first amorphous carbon and a second amorphous carbon and has a $D_{50}/D_{10}$ of 3.5 to 10 as indicated by particle size analysis using a particle size analyzer (Mastersizer 3000).

In an embodiment, the solid electrolyte layer may include a sulfide-based solid electrolyte.

In an embodiment, the anodeless coating layer may have a porosity of 50 to 80 percent (%).

## Effects

According to the present disclosure, it is possible to provide an anodeless coating layer exhibiting enhanced performance, stability, and/or lifespan characteristics, and an all-solid-state battery including the same.

## Brief Description of Drawings

FIG. 1 is a graph showing evaluation results on lifespan characteristics (capacity retention according to cycle) of all-solid-state batteries according to Examples and Comparative Examples.
FIG. 2 is a graph showing particle size analysis results on an anodeless coating layer slurry of Example 1.
FIG. 3 is a graph showing particle size analysis results on an anodeless coating layer slurry of Example 2.
FIG. 4 is a graph showing particle size analysis results on an anodeless coating layer slurry of Comparative Example 1.
FIG. 5 is a graph showing particle size analysis results on an anodeless coating layer slurry of Comparative Example 2.
FIG. 6 is a graph showing particle size analysis results on an anodeless coating layer slurry of Comparative Example 3.
FIG. 7 is a graph showing particle size analysis results on an anodeless coating layer slurry of Comparative Example 4.
FIG. 8 is a graph showing particle size analysis results on an anodeless coating layer slurry of Comparative Example 5.

## Best Mode for Carrying Out the Invention

Terms or words used in this specification and claims should not be construed as limited to their common or dictionary meanings, and it should be interpreted as meaning and concept consistent with the technical idea of the present disclosure based on the principle that the inventor may appropriately define the concept of terms in order to explain his or her invention in the best way.

Therefore, it is understood that the configuration of an embodiment described in this specification is one of the most preferred embodiments of the present disclosure and does not represent the entire technical idea of the present disclosure, so various equivalents and modification examples that can replace the embodiments at the time of filing the present application may exist.

In the specification, singular expressions include plural expressions unless the context clearly indicates otherwise.

In the specification, if a part "includes" a certain element, it indicates that the part may further include other elements rather than excluding other elements, unless specifically stated to the contrary. Accordingly, for example, a composition including compound A may include compounds other than A. However, in certain embodiments, the term "including" also encompasses more limited meanings "of consisting essentially/inherently of" and "consisting of," and for example, "a composition including compound A" may also consist (essentially/inherently) of compound A.

In connection with this, as used in the specification, it should be understood that terms such as "being provided with" or "having" are intended to designate the presence of implemented features, numbers, operations, components, or combinations thereof, but not exclude in advance the possibility of the presence or addition of one or more other features, numbers, operations, components, or combinations thereof.

In the specification, if an arbitrary member is located "on" another arbitrary member, not only a case where such member is in contact with another member, but also a case where another member or substance exists between the two members are included.

If amounts, concentrations, or other values or parameters are given as listings of ranges, desirable ranges, desirable upper limits and desirable lower limits in this specification, it is to be understood that all ranges that may be formed from any pair of any upper range limits or desirable values and any lower range limits or desirable values, are specifically disclosed, regardless of whether the range is separately disclosed. If a range of numeric values is referred to in the specification, unless otherwise stated, for example, unless there is a limited term such as greater than and less than, the range is intended to include the endpoint values and all integers and fractions within the range. The scope of the present disclosure is not intended to be limited to the specific values referred to when defining a range.

Among the physical properties referred to in the specification, in cases where the measurement temperature affects the relevant physical properties, unless otherwise specified, the physical properties are measured at room temperature. The term room temperature is a natural temperature that is not heated or reduced, and may indicate, for example, any temperature in a range of about 10 degrees Celsius (°C) to 30°C, about 23°C, or about 25°C. Additionally, unless otherwise specified, the unit of the temperature in the specification is °C.

In addition, among the physical properties referred to in the specification, in cases where the measurement pressure affects the relevant physical properties, unless otherwise specified, the physical properties are measured at normal pressure, that is, atmospheric pressure (about 1 atm)

In the specification, the term "all-solid-state battery" may indicate an all-solid-state secondary battery, and may also be referred to as a cell, a secondary battery, or a battery.

In the specification, the term "anodeless coating layer" indicates a coating layer formed between a negative electrode current collector and a solid electrolyte layer in an all-solid-state battery in which lithium is absorbed into the anodeless coating layer during charging, and the lithium is precipitated to form a metal layer between the negative electrode current collector and the anodeless coating layer after the charge capacity of the anodeless coating layer is exceeded, and the lithium in the anodeless coating layer and the lithium metal layer is ionized and moves toward a positive electrode during discharging. The anodeless coating layer herein may be different in composition and working principle from typical negative electrode active material layers. The anodeless coating layer may cover the lithium metal layer formed on a negative electrode current collector during charging, serving as a protection layer for a lithium metal layer and inhibiting lithium dendrite deposition and growth, thereby preventing short circuits and capacity degradation and improving performance in all-solid-state batteries.

A first aspect of the present disclosure relates to an anodeless coating layer.

The anodeless coating layer of the present disclosure may include, for example, a first amorphous carbon and a second amorphous carbon. The terms "first amorphous carbon" and "second amorphous carbon" in the specification are intended to tell apart amorphous carbons having different characteristics, and do not necessarily indicate that the two are different types. The first amorphous carbon and the second amorphous carbon may be of the same or different types. When two types of amorphous carbon having different characteristics are included in the anodeless coating layer, for example, an amorphous carbon having a relatively larger average particle size of primary particles and/or secondary particles may be referred to as a first amorphous carbon, and an amorphous carbon having a relatively smaller average particle size of primary particles and/or secondary particles may be referred to as a second amorphous carbon, and in another example, an amorphous carbon having a relatively smaller specific surface area may be referred to as a first amorphous carbon, and an amorphous carbon having a relatively larger specific surface area may be referred to as a second amorphous carbon.

The anodeless coating layer may have a $D_{50}/D_{10}$ of, for example, 3.5 to 10 as indicated by particle size analysis using a particle size analyzer (Mastersizer 3000). The particle size analysis using the particle size analyzer (Mastersizer 3000) may be performed as described in the following Evaluation Examples. In another example, the anodeless coating layer may have a $D_{50}/D_{10}$ of 4.0 or greater, 4.5 or greater, 5.0 or greater, or 5.5 or greater, or 9.5 or less, 8.0 or less, 7.5 or less, 7.0 or less, 6.5 or less, or 6.0 or less. The present disclosure may improve the dispersibility of an anodeless coating layer slurry and provide an all-solid-state battery exhibiting excellent lifespan characteristics by controlling the particle size characteristics of the anodeless coating layer as described above.

The anodeless coating layer of the present disclosure may have a $D_{10}$ of 0.06 micrometers ($\mu$m) or less. The $D_{10}$ may be, in another example, 0.055 $\mu$m or less or 0.05 $\mu$m or less. The anodeless coating layer of the present disclosure may have a $D_{10}$ of 0.03 $\mu$m or greater. The $D_{10}$ may be, in another example, 0.031 $\mu$m or greater, 0.032 $\mu$m or greater, 0.033 $\mu$m or greater, 0.034 $\mu$m or greater, 0.035 $\mu$m or greater, 0.036 $\mu$m or greater, 0.037 $\mu$m or greater, 0.038 $\mu$m or greater, 0.039 $\mu$m or greater, 0.040 $\mu$m or greater, 0.041 $\mu$m or greater, 0.042 $\mu$m or greater, 0.043 $\mu$m or greater, 0.044 $\mu$m or greater, 0.045 $\mu$m or greater, 0.046 $\mu$m or greater, or 0.047 $\mu$m or greater.

When the $D_{10}$ of the anodeless coating layer is too large or too small, the dispersibility of the anodeless coating layer slurry may be reduced, which appears to have a negative effect on the lifespan characteristics or stability of all-solid-state batteries. Therefore, controlling the particle size of the anodeless coating layer as described above is highly suggested, and lifespan characteristics may be further improved by additionally controlling characteristics described below.

The present disclosure may relate to, for example, an anode-free coating layer having two peaks between 0.1 $\mu$m and 0.5 $\mu$m in a graph with an x-axis ($\mu$m) for size and a y-axis (%) for volume density, derived from particle size analysis using a particle size analyzer (Mastersizer 3000) and satisfying Equation 1 below.

$$[\text{Equation 1}]$$
$$1.0 \leq \{(x_2-x_1)/x_1\}*(y_1/y_2) \leq 2.0$$

In Equation 1 above, $x_1$ and $x_2$ may each be x-axis values of the two peaks, and $x_1 < x_2$ may be satisfied, $y_1$ may be a y-axis value of peak $x_1$, and $y_2$ may be a y-axis value of peak $x_2$.

In the specification, the term "peak" indicates an inflection point (dy/dx=0) on a graph where dy/dx is greater than zero at $x-\Delta x$ and less than zero at $x+\Delta x$.

In another example, $\{(x_2-x_1)/x_1\}*(y_1/y_2)$ in Equation 1 above may be 1.1 or greater, 1.2 or greater, or 1.3 or greater, or 1.9 or less, 1.8 or less, 1.7 or less, 1.6 or less, 1.5 or less, or 1.4 or less.

The anodeless coating layer of the present disclosure may further improve lifespan and stability of all-solid-state batteries by satisfying the range of Equation 1 with two peaks between 0.1 $\mu$m and 0.5 $\mu$m as described above. Although reasons are not clearly defined, for an anodeless coating layer satisfying the above configuration, it is thought that the dispersion of amorphous carbon and/or metals and binders described below included in a slurry is improved, thereby both enhancing lithium ion mobility and increasing reactions between lithium and metals that form alloys or compounds with lithium. This excellent lifespan and stability may be further improved through the following configurations.

$(y_1/y_2)$ in Equation 1 above may be, for example, in a range of 0.62 to 0.92. $(y_1/y_2)$ in Equation 1 above may be, in another example, 0.63 or greater, 0.64 or greater, 0.65 or greater, 0.66 or greater, 0.67 or greater, 0.68 or greater, 0.69 or greater, 0.70 or greater, 0.71 or greater, 0.72 or greater, 0.73 or greater, 0.74 or greater, 0.75 or greater, 0.76 or greater, 0.77 or greater, or 0.78 or greater, or 0.91 or less, 0.90 or less, 0.89 or less, 0.88 or less, 0.87 or less, 0.86 or less, 0.85 or less, 0.84 or less, 0.83 or less, or 0.82 or less.

$(x_2-x_1)/x_1$ in Equation 1 above may be, for example, in a range of 1.5 to 2.5. $(x_2-x_1)/x_1$ in Equation 1 above may be, in another example, 1.55 or greater, 1.60 or greater, 1.65 or greater, 1.70 or greater, or 1.75 or greater, or 2.4 or less, 2.3 or less, 2.2 or less, 2.1 or less, 2.0 or less, 1.9 or less, or 1.8 or less.

The present disclosure may relate to an anodeless coating layer in which a ratio of an average primary particle size of the first amorphous carbon to an average primary particle size of the second amorphous carbon may be in a range of 1.1 to 3.3, and a weight ratio of the first amorphous carbon to the second amorphous carbon may be in a range of 5 to 20. The present disclosure may increase the amount of amorphous carbon that is lithiated through an anodeless coating layer that includes first and second amorphous carbons having a ratio of average primary particle sizes within the range as defined above, in a specific weight ratio. In addition, the present disclosure may further improve the safety and lifespan characteristics of all-solid-state batteries by facilitating reactions between lithium and metals, metalloid elements, or combinations thereof that form alloys or compounds with lithium, described below.

The ratio of the average primary particle size of the first amorphous carbon to the average primary particle size of the second amorphous carbon may be, in another example, 1.2 or greater, 1.3 or greater, or 1.4 or greater, 1.5 or greater, 1.6 or greater, 1.7 or greater, 1.8 or greater, 1.9 or greater, or 2.0 or greater, or 3.2 or less, 3.1 or less, 3.0 or less, 2.9 or less, 2.8 or less, 2.7 or less, 2.6 or less, 2.5 or less, 2.4 or less, 2.3 or less, 2.2 or less, or 2.1 or less. The average particle size of the primary and/or secondary particles of amorphous carbon may be measured as described in the following Evaluation Examples.

A weight ratio of the first amorphous carbon to the second amorphous carbon may be, in another example, 6 or greater, 7 or greater, or 8 or greater, or 18 or less, 16 or less, 14 or less, 12 or less, or 10 or less.

The anodeless coating layer of the present disclosure includes the first and second amorphous carbons having controlled average particle size ratio of primary particles as described above at a specific weight ratio, and thus may control the porosity of the anodeless coating layer within ranges described below, may prevent crack formation in a negative electrode during charging of all-solid-state batteries, and may enhance battery lifespan characteristics. These effects may be further improved by controlling the following additional components.

The average primary particle size of the first amorphous carbon may be, for example, in a range of 30 to 50 nanometers (nm). In the specification, the average primary particle size of amorphous carbon may be measured as described in the following Evaluation Examples. The average primary particle size of the first amorphous carbon may be, in another example, 31 nm or greater, 32 nm or greater, 33 nm or greater, 34 nm or greater, 35 nm or greater, 36 nm or greater, 37 nm or greater, 38 nm or greater, 39 nm or greater, or 40 nm or less, 49 nm or less, 48nm or less, 47 nm or less, 46 nm or less, 45 nm or less, 44 nm or less, 43 nm or less, or 42 nm or less.

The average primary particle size of the second amorphous carbon may be, for example, in a range of 15 to 25 nm. The average primary particle size of the second amorphous carbon may be, in another example, 16 nm or greater, 17 nm or greater, 18 nm or greater, or 19 nm or greater, or 24 nm or less, 23 nm or less, 22 nm or less, or 21 nm or less.

The present disclosure controls the average primary particle size of the first amorphous carbon and/or second amorphous carbon to the range defined above, and thus may increase the amount of amorphous carbon that is lithiated per unit area, and may facilitate reactions between lithium and metals, metalloid elements, or combinations thereof that form alloys or compounds with lithium, described below, thereby reducing the amount of irreversible lithium per unit area. These effects may be further improved by controlling the specific surface area of the first and second amorphous carbons described below.

The specific surface area of the first amorphous carbon may be, for example, in a range of 10 to 100 square meters per gram ($m^2/g$). The specific surface area in the specification may be measured as described in the following Evaluation Examples. The specific surface area of the first amorphous carbon may be, in another example, 20 $m^2/g$ or greater, 30 $m^2/g$ or greater, or 40 $m^2/g$ or greater, or 90 $m^2/g$ or less, 80 $m^2/g$ or less, 70 $m^2/g$ or less, or 60 $m^2/g$ or less.

The specific surface area of the second amorphous carbon may be, for example, in a range of 110 to 230 $m^2/g$. The specific surface area of the second amorphous carbon may be, in another example, 120 $m^2/g$ or greater, 130 $m^2/g$ or greater, 140 $m^2/g$ or greater, or 150 $m^2/g$ or greater, or 220 $m^2/g$ or less, 210 $m^2/g$ or less, 200 $m^2/g$ or less, 190 $m^2/g$ or less, 180 $m^2/g$ or less, 170 $m^2/g$ or less, or 160 $m^2/g$ or less.

A ratio of the specific surface area of the second amorphous carbon to the specific surface area of the first amorphous carbon may be, for example, 4.5 or less. The ratio of the specific surface area of the second amorphous carbon to the specific surface area of the first amorphous carbon may be, in another example, 4.4 or less, 4.3 or less, 4.2 or less, 4.1 or less, 4.0 or less, 3.9 or less, 3.8 or less, 3.7 or less, 3.6 or less, 3.5 or less, 3.4 or less, 3.3 or less, 3.2 or less, 3.1 or less, 3.0 or less, or 2.9 or less, or 0.1 or greater, 0.5 or greater, 1.0 or greater, 1.5 or greater, 2.0 or greater, or 2.5 or greater.

The anodeless coating layer of the present disclosure may further include, for example, a first aggregate in which the first amorphous carbon is aggregated and/or a second aggregate in which the second amorphous carbon is aggregated. In the specification, an aggregate may indicate a secondary particle. That is, in the specification, the first aggregate may indicate a secondary particle of the first amorphous carbon, and the second aggregate may indicate a secondary particle of the second amorphous carbon. The amorphous carbon included in the anodeless coating layer of the present disclosure may be present solely in the form of primary particles, solely in the form of secondary particles, or in the form of a mixture of primary particles and secondary particles.

A ratio of the average particle size of the first aggregate to the average particle size of the second aggregate may be, for example, in a range of 1.5 to 5. The average particle size of aggregate in the specification may be measured as described in the following Evaluation Examples. A ratio of the average particle size of the second aggregate to the average particle size of the second aggregate may be, in another example, 1.6 or greater, 1.7 or greater, 1.8 or greater, 1.9 or greater, 2.0 or greater, 2.1 or greater, or 2.2 or greater, or 4.5 or less, 4.0 or less, 3.5 or less, 3.0 or less, or 2.5 or less. The anodeless coating layer of the present disclosure controls the ratio of the average particle size of the first aggregate to the average particle size of the second aggregate as described above and thus may reduce the amount of irreversible lithium per unit area, thereby improving lifespan characteristics or performance.

The average particle size of the first aggregate may be, for example, in a range of 160 to 400 nm. The average particle size of the first aggregate may be, In another example, 170 nm or greater, 180 nm or greater, 190 nm or greater, 200 nm or greater, 210 nm or greater, 220 nm or greater, 230 nm or greater, or 240 nm or less, or 380 nm or less, 360 nm or less, 340 nm or less, 320 nm or less, 300 nm or less, 280 nm or less, or 260 nm or less.

The average particle size of the second aggregate may be, for example, in a range of 50 to 150 nm. The average particle size of the second aggregate may be, in another example, 60 nm or greater, 70 nm or greater, 80 nm or greater, 90 nm or greater, or 100 nm or greater, or 140 nm or less, 130 nm or less, 120 nm or less, or 110 nm or less.

The first amorphous carbon and the second amorphous carbon may be, for example, each independently at least one selected from the group consisting of carbon black, acetylene black, furnace black, Ketjen black, and graphene, but are not limited thereto, and any amorphous carbon that may be used in anodeless all-solid-state batteries may be used without limitation.

The anodeless coating layer of the present disclosure may further include, for example, metals, metalloid elements, or combinations thereof that form alloys or compounds with lithium.

The metals, metalloid elements, or combinations thereof that form alloys or compounds with lithium may be, for example, at least one selected from the group consisting of gold (Au), platinum (Pt), palladium (Pd), silicon (Si), silver (Ag), aluminum (Al), bismuth (Bi), tin (Sn) and zinc (Zn).

The particle size of the metals, metalloid elements, or combinations thereof that form alloys or compounds with lithium may be, for example, in a range of 10 to 1000 $\mu$m. The particle size may indicate a maximum particle size, a minimum particle size, or an average particle size. The particle size of the metals, metalloid elements, or combinations thereof that form alloys or compounds with lithium may be, in another example, 20 $\mu$m or greater, 30 $\mu$m or greater, 40 $\mu$m

or greater, or 50 µm or greater, or 500 µm or less, 400 µm or less, 300 µm or less, 200 µm or less, or 100 µm or less.

A weight ratio of a sum of the first amorphous carbon and the second amorphous carbon to the metals, metalloid elements, or combinations thereof that form alloys or compounds with lithium may be, for example, in a range of 1 to 10. The weight ratio of a sum of the first amorphous carbon and the second amorphous carbon to the metals, metalloid elements, or combinations thereof that form alloys or compounds with lithium may be, in another example, 1.5 or greater, 2 or greater, or 2.5 or greater, or 8 or less, 6 or less, or 4 or less.

The anodeless coating layer of the present disclosure may further include, for example, a binder. As the binder, for example, an aqueous binder, an organic binder, or a combination thereof may be used. The binder may be, for example, polyvinyl alcohol, carboxymethyl cellulose, hydroxypropyl cellulose, diacetyl cellulose, polyvinylidene fluoride, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, an epoxy resin, nylon or a combination thereof. As the aqueous binder, for example, styrene butadiene rubber, carboxymethyl cellulose or a combination thereof may be used. As the organic binder, for example, polytetrafluoroethylene, polyvinylidene fluoride, or a combination thereof may be used.

A weight ratio of a sum of the first amorphous carbon, the second amorphous carbon, and the metals, metalloid elements, or combinations thereof that form alloys or compounds with lithium to the binder may be, for example, in a range of 5 to 50. The weight ratio of a sum of the first amorphous carbon, the second amorphous carbon, and the metals, metalloid elements, or combinations thereof that form alloys or compounds with lithium to the binder may be, in another example, 6 or greater, 7 or greater, 8 or greater, 9 or greater, 10 or greater, 11 or greater, 12 or greater, 13 or greater, 14 or greater, 15 or greater, 16 or greater, 17 or greater, 18 or greater, 19 or greater, 20 or greater, 21 or greater, 22 or greater, or 23 or greater, or 45 or less, 40 or less, 35 or less, 30 or less, or 25 or less. The present disclosure may provide an all-solid-state battery exhibiting excellent performance and lifespan characteristics by controlling the weight ratio among the compositions included in the anodeless coating layer as described above.

The anodeless coating layer of the present disclosure may further include, for example, a solvent. In the specification, the fact that the anodeless coating layer further includes a solvent may indicate that a solvent is used in the manufacture of the anodeless coating layer, and may not indicate that an anodeless coating layer completed through a process including drying contains a solvent. As the solvent, solvents such as water or N-methylpyrrolidone (NMP) may be used.

The anodeless coating layer of the present disclosure may further include, for example, other additives. As the other additives, additives such as fillers, coating agents, dispersants, and ion conductive assistants used in typical all-solid-state batteries may be used without limitation as long as those additives do not hinder the purpose of the present disclosure.

The anodeless coating layer of the present disclosure may be prepared, for example, by applying a slurry in which materials constituting the anodeless coating layer are dispersed onto a negative electrode current collector and drying the resulting product.

The anodeless coating layer of the present disclosure may have a thickness that is 50% or less, 40% or less, 30% or less, 20% or less, 10% or less, or 5% or less of a thickness of a negative electrode active material layer described below. The thickness of the anodeless coating layer may be, for example, in a range of 1 to 20 µm, 5 to 18 µm, or 9 to 15 µm. Controlling the thickness of the anodeless coating layer as described above may prevent lithium dendrite formed between the anodeless coating layer and the negative electrode current collector described below from breaking down the anodeless coating layer, leading to improved cycle characteristics, increased energy density, and reduced internal resistance of all-solid-state batteries.

A second aspect of the present disclosure may relate to an all-solid-state battery including a positive electrode, a solid electrolyte layer, an anodeless coating layer, and a negative electrode. The anodeless coating layer in this case includes a first amorphous carbon and a second amorphous carbon and has a $D_{50}/D_{10}$ of 3.5 to 10 as indicated by particle size analysis using a particle size analyzer (Mastersizer 3000).

The content of the first aspect may, unless otherwise specified, apply equally to the content of the second aspect.

The anodeless coating layer of the present disclosure may have, for example, a porosity of 50 to 80%. The porosity of the anodeless coating layer may be measured as described in the following Evaluation Examples. The porosity of the anodeless coating layer may be, in another example, 55% or greater, 60% or greater, or 65% or greater, or 75% or less, or 70% or less.

The positive electrode may include, for example, a positive electrode current collector and/or a positive electrode active material layer.

As the positive electrode current collector, a known metal that may be used as the current collector of an all-solid-state battery may be used. The positive electrode current collector may use, for example, a plate, a mesh, or a foil, composed of copper (Cu), nickel (Ni), aluminum (Al), vanadium (V), gold (Au), platinum (Pt), chromium (Cr), iron (Fe), zinc (Zn), indium (In), germanium (Ge), lithium (Li), magnesium (Mg), stainless steel, titanium (Ti), cobalt (Co), or an alloy thereof. The positive electrode current collector may be omitted in some cases.

The positive electrode active material layer may include, for example, a positive electrode active material, a solid electrolyte, a binder, and/or a conductive material.

The positive electrode active material reversibly absorbs and desorbs lithium ions. The positive electrode active material may be, for example, a lithium transition metal oxide such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate, nickel sulfide, copper sulfide, lithium sulfide, iron oxide, or vanadium oxide, but is not limited thereto, and any material available as a positive electrode active material in the art may be used. The positive electrode active materials may be used alone or in a mixture of two or more thereof.

The lithium transition metal oxide may be, for example, a compound represented by any one among the formulas of: $Li_aA_{1-b}B_bD_2$ (where $0.90 \leq a \leq 1$ and $0 \leq b \leq 0.5$); $Li_aNi_{1-b-c}Co_bB_cO_{2-\alpha}F_2$ (where $0.90 \leq a \leq 1$, $0 \leq b \leq 0.5$, $0 \leq c \leq 0.05$, and $0 < \alpha < 2$); $Li_aNi_{1-b-c}Mn_bB_cD_\alpha$ (where $0.90 \leq a \leq 1$, $0 \leq b \leq 0.5$, $0 \leq c \leq 0.05$, and $0 \leq \alpha \leq 2$); $Li_aNi_{1-b-c}Co_bB_cD_\alpha$ (where $0.90 \leq a \leq 1$, $0 \leq b \leq 0.5$, $0 \leq c \leq 0.05$, and $0 < \alpha \leq 2$); $Li_aE_{1-b}B_bO_{2-c}D_c$ (where $0.90 \leq a \leq 1$, $0 \leq b \leq 0.5$, and $0 \leq c \leq 0.05$); $LiE_{2-b}B_bO_{4-c}D_c$ (where $0 \leq b \leq 0.5$ and $0 \leq c \leq 0.05$); $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0 < \alpha < 2$); $Li_aCoG_bO_2$ (where $0.90 \leq a \leq 1$ and $0.001 \leq b \leq 0.1$); $Li_aMnG_bO_2$ (where $0.90 \leq a \leq 1$ and $0.001 \leq b \leq 0.1$); $Li_aMn_2GbO_4$ (where $0.90 \leq a \leq 1$ and $0.001 \leq b \leq 0.1$); $Li_aNi_{1-b-c}Mn_8B_cO_{2-\alpha}F_\alpha$ (where $0.90 \leq a \leq 1$, $0 \leq b \leq 0.5$, $0 \leq c \leq 0.05$, and $0 < \alpha < 2$); $Li_aNi_{1-b-c}Mn_bB_cO_{2-\alpha}F_2$ (where $0.90 \leq a \leq 1$, $0 \leq b \leq 0.5$, $0 \leq c \leq 0.05$, and $0 < \alpha < 2$); $Li_aNi_bE_cG_dO_2$ (where $0.90 \leq a \leq 1$, $0 \leq b \leq 0.9$, $0 \leq c \leq 0.5$, and $0.001 \leq d \leq 0.1$); $Li_aNi_bCo_cMn_dGeO_2$ (where $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$. In the compounds, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound having a coating layer added to the surface of the above-described compound may be used as the positive electrode active material, or a mixture of the above-described compound and the compound having a coating layer added thereto may be used. The coating layer added to the surface of the compound may contain, for example, a lithium ion conductive oxide. The lithium ion conductive oxide may include $LiNbO_3$, $Li_4Ti_5O_{12}$, or $Li_3PO_4$, but is not limited thereto. The compound forming the coating layer may be amorphous or crystalline. A method of forming a coating layer may consider, for example, a spray coating method, a dipping method or the like, but may be selected without limitation within a range that does not adversely affect the physical properties of the positive electrode active material.

When the positive electrode active material is, for example, a ternary lithium transition metal oxide such as NCA and NCM, including nickel (Ni), there may be an increase in capacity density of an all-solid-state battery, reducing the metal elution of the positive electrode active material in a charged state. Accordingly, the all-solid-state battery in a charged state may have improved cycle characteristics.

The positive electrode active material may have, for example, particle shapes such as a sphere or an elliptical sphere. The particle size of the positive electrode active material is not particularly limited, and may be within a range applicable to positive electrode active materials of typical all-solid-state secondary batteries. The content of the positive electrode active material of the positive electrode is not particularly limited, and may be within a range applicable to positive electrodes of typical all-solid-state secondary batteries.

The solid electrolyte included in the positive electrode active material layer may be, for example, the same as or different from the solid electrolyte included in the solid electrolyte layer. The solid electrolyte included in the positive electrode active material layer may be a sulfide-based solid electrolyte, an oxide-based solid electrolyte, a phosphate-based solid electrolyte, or a halide-based solid electrolyte, but is not limited thereto, and may be any electrolyte commonly used in all-solid-state batteries.

The solid electrolyte included in the positive electrode active material layer may have, for example, a smaller average particle size than the solid electrolyte included in the solid electrolyte layer. For example, the average particle size of the solid electrolyte included in the positive electrode active material layer may be 90% or less, 80% or less, 70% or less, 60% or less, 50% or less, 40% or less, 30% or less, or 20% or less of the average particle size of the solid electrolyte included in the solid electrolyte layer.

The binder included in the positive electrode active material layer may be, for example, acrylonitrile butadiene rubber (ABR), butadiene rubber (BR), styrene butadiene rubber (SBR), polytetrafluoroethylene, polyvinylidene fluoride, or polyethylene.

The conductive material included in the positive electrode active material layer may be, for example, graphite, carbon black, acetylene black, Ketjen black, carbon fiber, or metal powder.

In addition, the positive electrode active material layer may further include additives, for example, fillers, coating agents, dispersants, and ion conductive assistants, and these additives may be used without limitation as long as they are known materials generally used in electrodes of all-solid-state batteries.

The solid electrolyte layer may include, for example, a sulfide-based solid electrolyte. The sulfide-based solid electrolyte may be, for example, at least one selected from $Li_2S$-$P_2S_5$-$Li_2O$, $Li_2S$-$P_2S_5$-$Li_2O$-LiI, $Li_2S$-$SiS_2$, $Li_2S$-$SiS_2$-LiI,

$Li_2S$-$SiS_2$-LiBr, $Li_2S$-$SiS_2$-LiCl, $Li_2S$-$SiS_2$-$B_2S_3$-LiI, $Li_2S$-$SiS_2$-$Li_3PO_4$, $Li_2S$-$SiS_2$-$Li_pMO_q$ (p and q are positive numbers, and M is one among P, Si, Ge, B, Al, Ga, and In), $Li_2S$-$SiS_2$-$P_2S_5$-LiI, $Li_2S$-$P_2S_5$, $Li_2S$-$P_2S_5$-LiX (X is a halogen element), $Li_2S$-$B_2S_3$, $Li_2S$-$P_2S_5$-$Z_mS_n$ (m and n are positive numbers, and Z is one of Ge, Zn, or Ga), $Li2S$-$GeS2$, $Li_{7-x}PS_{6-x}Cl_x$ ($0{\leq}x{\leq}2$), $Li_{7-x}PS_{6-x}Br_x$ ($0{\leq}x{\leq}2$), and $Li_{7-x}PS_{6-x}I_x$ ($0{\leq}x{\leq}2$). The sulfide-based solid electrolyte may be prepared by, for example, treating starting materials such as $Li_2S$ and $P_2S_5$, using a method of melting rapid cooling method or mechanical milling. In addition, after the treatment, heat treatment may be performed. The solid electrolyte may be amorphous, crystalline, or a mixture state thereof. In the present disclosure, the sulfide-based solid electrolyte may include, for example, at least sulfur (S), phosphorus (P), and lithium (Li) as constituent elements among the sulfide-based solid electrolyte materials described above.

The sulfide-based solid electrolyte may be, for example, an argyrodite-type compound including at least one selected from $Li_{7-x}PS_{6-x}Cl_x$($0{\leq}x{\leq}2$), $Li_{7-x}PS_{6-x}Br_x$($0{\leq}x{\leq}2$) ($0{\leq}x{\leq}2$), and $Li_{7-x}PS_{6-x}I_x$ ($0{\leq}x{\leq}2$). In particular, the sulfide-based solid electrolyte may be an argyrodite-type compound including at least one selected from $Li_6PS_5Cl$, $Li_6PS_5Br$, and $Li_6PS_5I$.

The argyrodite-type solid electrolyte may have a density of, for example, 1.5 to 2.0 grams per cubic centimeter (g/cc). Since the argyrodite-type solid electrolyte has a density of 1.5 g/cc or greater, the internal resistance of the all-solid-state secondary battery may be reduced, and the penetration of the solid electrolyte by Li may be effectively suppressed.

The solid electrolyte may have an elastic modulus of for example, 15 to 35 gigapascals (GPa).

The solid electrolyte layer may include, for example, a binder. The binder included in the solid electrolyte layer may be, for example, one of the types of binders included in the positive electrode active material layer, but is not limited thereto, and any binder used in the art may be applicable. The binder included in the solid electrolyte layer may be the same as or different from the binder included in the positive electrode active material layer and/or the anodeless coating layer described above.

The negative electrode may include, for example, a negative electrode current collector.

A known metal that may be used as the current collector of an all-solid-state battery may be used as the negative electrode current collector. For example, the negative electrode current collector may use, for example, a material that does not form an alloy or a compound with lithium. As the negative electrode current collector, for example, a material selected from the group consisting of copper (Cu), nickel (Ni), aluminum (Al), vanadium (V), gold (Au), platinum (Pt), magnesium (Mg), iron (Fe), titanium (Ti), cobalt (Co), chromium (Cr), zinc (Zn), germanium (Ge), indium (In), and stainless steel may be used, but the negative electrode current collector is not limited thereto, and any material used as an electrode current collector in the art may be used as long as the material does not hinder the purpose of the present disclosure. The negative electrode current collector may be composed of one of the above-described metals, or may be composed of an alloy of two or more metals or a coating material. The negative electrode current collector may be, for example, in the form of a plate, mesh, or foil, but is not limited thereto.

The negative electrode of the present disclosure may further include, for example, a thin film including an element capable of forming an alloy with lithium on the negative electrode current collector. The thin film may be included between the negative electrode current collector and the anodeless coating layer. The element capable of forming an alloy with lithium may be, for example, gold, silver, zinc, tin, indium, silicon, aluminum, or bismuth, but is not limited thereto, and any element capable of forming an alloy with lithium in the art is applicable. The thin film may be composed of one of the examples above or may be composed of various types of alloys. As the negative electrode of the present disclosure further includes the thin film as described above, an all-solid-state battery may have further improved cycle characteristics.

The thin film may have a thickness of, for example, 1 to 800 nm, 10 to 700 nm, 50 to 600 nm, or 100 to 500 nm. The thin film may be formed through, for example, a vacuum deposition method, a sputtering method, or a plating method, but is not limited thereto, and any method capable of forming a thin film in the art is applicable.

The all-solid-state battery of the present disclosure may further include, for example, a metal containing lithium or a lithium alloy and/or a metal layer thereof between the negative electrode current collector and the anodeless coating layer, and/or within the anodeless coating layer, by charging. The lithium alloy may be, for example, an Li-Al alloy, an Li-Sn alloy, an Li-In alloy, an Li-Ag alloy, an Li-Au alloy, an Li-Zn alloy, an Li-Ge alloy, or an Li-Si alloy, but is not limited thereto, and any lithium alloy used in the art is applicable. The metal or metal layer included between the negative electrode current collector and the anodeless coating layer, and/or within the anodeless coating layer may be composed of one of these alloys or lithium, or may be composed of multiple types of alloys.

The metal layer including the lithium or lithium alloy may have a thickness of, for example, 1 to 1000 $\mu$m, 1 to 500 $\mu$m, 1 to 200 $\mu$m, 1 to 150 $\mu$m, 1 to 100 $\mu$m, or 1 to 50 $\mu$m. The thickness needs to be controlled as described above to help the metal layer perform a role thereof as a lithium storage well and improve cycle characteristics.

The metal layer may be, for example, precipitated between the negative electrode current collector and the anodeless coating layer through charging after assembly of an all-solid-state battery, and thus be formed. When the metal layer is formed between the negative electrode current collector and the anodeless coating layer through charging after assembly of an all-solid-state battery, the negative electrode current collector and the anodeless coating layer and a region therebetween may be, for example, an lithium (Li)-free region that includes no lithium in an initial state or a post-discharge state of the all-solid-state battery.

The all-solid-state battery of the present disclosure may have a capacity retention of, for example, 60% or greater even after 300 cycles. The all-solid-state battery of the present disclosure, in another embodiment, may have a capacity retention of 70% or greater, 75% or greater, 80% or greater, 81% or greater, 82% or greater, or 83% or more even after 300 cycles. The capacity retention according to the cycles may be measured as described in the following Evaluation Examples.

Hereinafter, the present disclosure will be explained in detail with reference to Examples in order to specifically explain the disclosed contents of the present disclosure as described above and the intended actions and effects of the present disclosure. However, Examples may be modified into various other forms, and the scope of the specification is not to be construed as being limited to Examples. It is emphasized that the examples represent the present disclosure and are provided to explain the present disclosure in more detail to those skilled in the art.

## Example 1

### <Manufacture of negative electrode>

A first amorphous carbon, a second amorphous carbon, silver (Ag) nanoparticles (particle size: 60 nanometers (nm)), a binder (PVdF), and an NMP solution were placed in a mixer (THINKY Corporation) container and mixed 12 times for 3 minutes at 2000 revolutions per minute (rpm). Thereafter, the NMP solution was additionally added, and a slurry mixed 5 times for 3 minutes at 2000 rpm was applied onto a SUS foil having a thickness of 10 micrometers ($\mu$m) using a bar coater, dried in air at 80°C for 20 minutes, and then vacuum-dried at 100°C for 12 hours. As a result, a negative electrode having an anodeless coating layer having a thickness of 10.57 $\mu$m and a porosity of 65.1% was formed on the SUS foil was obtained.

In this case, carbon black having an average primary particle size of 41 nm, an average secondary particle size of 250 nm, and a specific surface area of 54 square meters per gram ($m^2$/g) was used as the first amorphous carbon, and carbon black having an average primary particle size of 20 nm, an average secondary particle size of 109 nm, and a specific surface area of 154 $m^2$/g was used as the second amorphous carbon. In addition, the first amorphous carbon and the second amorphous carbon were mixed at a weight ratio of 9:1 (first amorphous carbon: second amorphous carbon), a weight ratio between the amorphous carbon (sum of all included amorphous carbon) and silver (Ag) nanoparticles was 3:1 (amorphous carbon: silver nanoparticles), and a weight ratio of the binder to a sum of the amorphous carbon (sum of all included amorphous carbon) and the silver nanoparticles was 6.5:93.5 (binder: sum of amorphous carbon and silver nanoparticles).

### (Manufacture of positive electrode)

LiNi$_{0.8}$Co$_{0.15}$Mn$_{0.05}$O$_2$ (NCM) was prepared as a positive electrode active material. In addition, Li$_6$PS$_5$Cl in the form of argyrodite-type crystals was prepared as a solid electrolyte. In addition, polytetrafluoroethylene (Teflon binder, Dupont) was prepared as a binder. In addition, carbon nanofibers (CNF) were prepared as a conductive material. Then, the materials were mixed in a weight ratio of positive electrode active material: solid electrolyte: conductive material: binder = 84: 15: 0.2: 1.2, and the mixture was molded into a large sheet shape to produce a positive electrode sheet. In addition, the positive electrode sheet was pressed onto an aluminum foil positive electrode current collector having a thickness of 18 $\mu$m to manufacture a positive electrode. The positive electrode was shown to have an initial charge capacity (charge capacity at first cycle) of about 20 milliampere-hours (mAh) at 4.25 volts (V) charge. The positive electrode was shown to have a weight of about 110 milligrams (mg). (About 203 mAh/g per active material weight).

### (Solid electrolyte)

As a solid electrolyte, a solid electrolyte of Li$_6$PS$_5$Cl was used.

### (Manufacture of all-solid-state batteries)

The positive electrode, the solid electrolyte, and the negative electrode were stacked and sealed in a pouch under a vacuum state to manufacture an all-solid-state battery. In this case, each portion of the positive electrode current collector and the negative electrode current collector was protruded outside the pouch to maintain a vacuum in the battery. The protrusions were used as the positive electrode and negative electrode terminals. In addition, the all-solid-state battery was subjected to a hydrostatic treatment at 500 megapascals (MPa) for 30 minutes. By performing the hydrostatic treatment, the characteristics as a battery were markedly improved.

### Example 2

An all-solid-state battery was obtained in the same manner as in Example 1, except that a negative electrode having an anodeless coating layer having a thickness of 14.4 μm and a porosity of 64.9% formed on a SUS foil, with a weight ratio of a binder to a sum of amorphous carbon (sum of all included amorphous carbon) and silver nanoparticles of 4:96 (binder: sum of amorphous carbon and silver nanoparticles) was manufactured in the manufacture of a negative electrode.

### Comparative Example 1

An all-solid-state battery was obtained in the same manner as in Example 1, except that a negative electrode having an anodeless coating layer having a thickness of 11.00 μm and a porosity of 67.6% formed on a SUS foil, with the introduction of a first amorphous carbon alone as an amorphous carbon was manufactured in the manufacture of a negative electrode.

### Comparative Example 2

An all-solid-state battery was obtained in the same manner as in Example 1, except that a negative electrode having an anodeless coating layer having a thickness of 10.33 μm and a porosity of 64.3% formed on a SUS foil, with a weight ratio of the first amorphous carbon to the second amorphous carbon of 5:5 was manufactured in the manufacture of a negative electrode.

### Comparative Example 3

An all-solid-state battery was obtained in the same manner as in Example 1, except that a negative electrode having an anodeless coating layer having a thickness of 10.33 μm and a porosity of 66.8% formed on a SUS foil, using carbon black having an average primary particle size of 12 nm and an average secondary particle of 48 nm, and a specific surface area of 249 $m^2$/g as a second amorphous carbon, was manufactured in the manufacture of a negative electrode.

### Comparative Example 4

An all-solid-state battery was obtained in the same manner as in Example 1, except that a negative electrode having an anodeless coating layer having a thickness of 16.0 μm and a porosity of 64.2% formed on a SUS foil, with a weight ratio of the first amorphous carbon to the second amorphous carbon of 8:2 (first amorphous carbon: second amorphous carbon) was manufactured in the manufacture of a negative electrode.

### Comparative Example 5

An all-solid-state battery was obtained in the same manner as in Example 1, except that a negative electrode having an anodeless coating layer having a thickness of 11.0 μm and a porosity of 61.9% formed on a SUS foil, with a weight ratio of the first amorphous carbon to the second amorphous carbon of 7:3 first amorphous carbon: second amorphous carbon) was manufactured in the manufacture of a negative electrode.

### Evaluation Example 1. Average particle size of primary and secondary particles of amorphous carbon

An average primary particle size of amorphous carbon was measured using SEM (FEI sirion), and an average secondary particle size of amorphous carbon was measured using a particle size analyzer (Beckman Coulter LS13 320).

### Evaluation Example 2. Specific surface area of amorphous carbon

A specific surface area of amorphous carbon was measured through a commonly used BET method (Brunauer, Emmett, and Teller's method). Specifically, the specific surface area of amorphous carbon was determined by measuring an adsorption amount of $N_2$ gas at 77 Kelvin (K) using a Micromeritics, ASAP 2460 device after out-gassing for about 6 hours until each sample reached a residual pressure of $10^{-3}$ torr at 298 K, and then analyzing the development of micropores from $S_{BET}$ and the mesopores from SBJH and deriving surface adsorption properties of carbon black.

### Evaluation Example 3. Particle size distribution of anodeless coating layer slurry

(1) Separation of slurry sample

A portion of each anodeless coating layer slurry of Examples and Comparative Examples was taken and diluted in an NMP solution to prepare an analysis sample.

(2) Analysis device

A particle size analyzer (Mastersizer 3000, Malvem panalytical) was used to conduct particle size analysis of the sample.

Specifically, the analysis samples prepared in process (1) were each placed in a sample inlet of the device, and particle size analysis was conducted under the following setting conditions.

⊙ Particle type : Carbon C
⊙ Material :

- Material name : Carbon C (carbon black)
- Refractive index : 1.746
- Adsorption index : 1.000

⊙ light source :

- Red light source : Max. 4 milliwatts (mW) He-Ne, 632.8 nm
- Blue light source : Max. 10 mW LED, 470 nm

⊙ Dispersant:

- Dispersant name : NMP
- Refractive index : 1.465

⊙ Measurement obscuration limits : 10-15%
⊙ Analysis model : Mie scattering

(3) Results

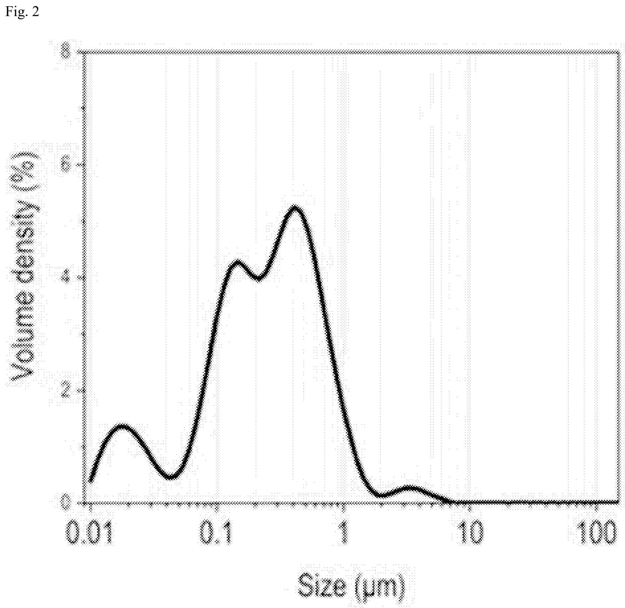

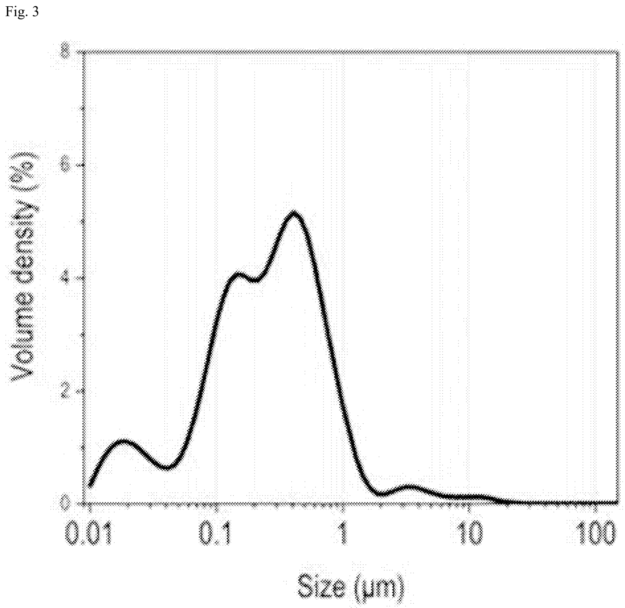

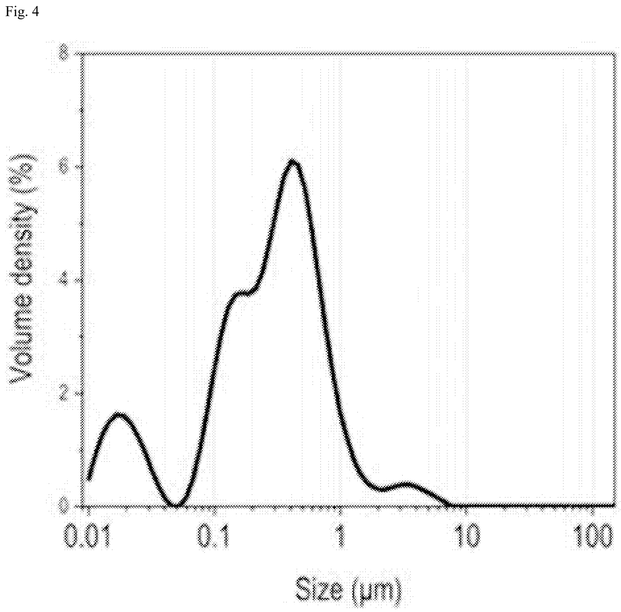

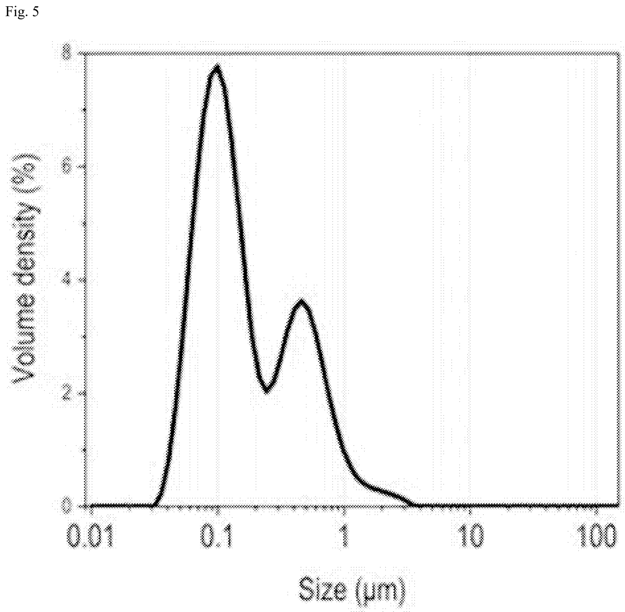

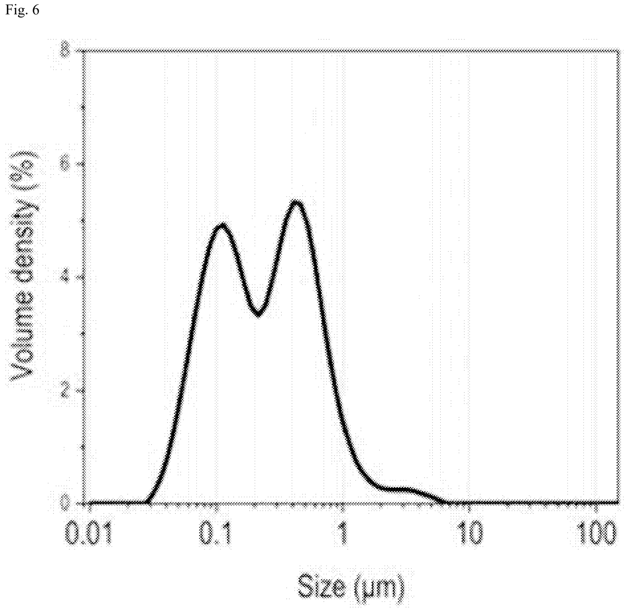

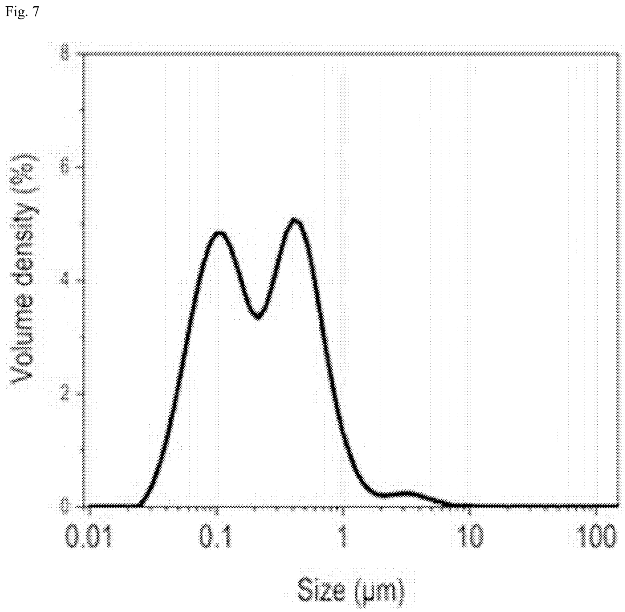

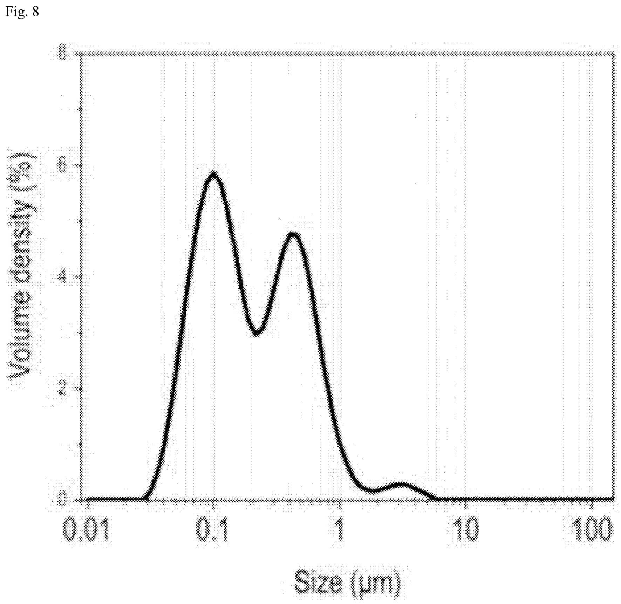

The results of the particle size distribution analysis based on the volume of the anodeless coating layer slurry according to the method described above are shown in Tables 1 and 2, and FIGS. 2 to 8 below. Table 2 shows x-axis and y-axis values for each of the two peaks observed between 0.1 $\mu$m and 0.5 $\mu$m on a graph of particle size analysis.

[Table 1]

| Item | Example 1 | Example 2 | Comparative Example 1 | Comparative Example 2 | Comparative Example 3 | Comparative Example 4 | Comparative Example 5 |
|---|---|---|---|---|---|---|---|
| $D_{10}$ ($\mu$m) | 0.0341 | 0.0471 | 0.0272 | 0.0675 | 0.0753 | 0.0684 | 0.0690 |
| $D_{50}$ ($\mu$m) | 0.267 | 0.278 | 0.323 | 0.140 | 0.255 | 0.231 | 0.190 |
| $D_{50}/D_{10}$ | 7.83 | 5.90 | 11.88 | 2.07 | 3.39 | 3.38 | 2.75 |

[Table 2]

| Item | x (particle size, $\mu$tm) | y (volume density, %) | $\{(x_2-x_1)/x_1\}*(y_1/y_2)$ |
|---|---|---|---|
| Example 1 | 0.146 | 4.28 | 1.446 |
| | 0.405 | 5.25 | |
| Example 2 | 0.146 | 4.07 | 1.399 |
| | 0.405 | 5.16 | |

(continued)

| Item | x (particle size, μm) | y (volume density, %) | $\{(x_2-x_1)/x_1\}*(y_1/y_2)$ |
|---|---|---|---|
| Comparative Example 1 | 0.166 | 3.78 | 0.891 |
| | 0.405 | 6.11 | |
| Comparative Example 2 | 0.0995 | 7.77 | 7.755 |
| | 0.46 | 3.63 | |
| Comparative Example 3 | 0.113 | 4.93 | 2.390 |
| | 0.405 | 5.33 | |
| Comparative Example 4 | 0.0995 | 4.83 | 2.919 |
| | 0.405 | 5.08 | |
| Comparative Example 5 | 0.0995 | 5.86 | 3.780 |
| | 0.405 | 4.76 | |

**Evaluation Example 4. Lifespan characteristics of cells**

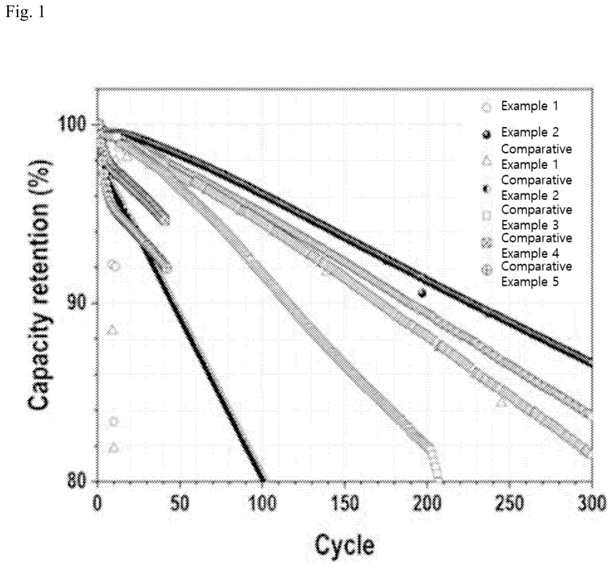

The all-solid-state batteries (pouch-type monocells) of Example and Comparative Examples were operated under the charge and discharge conditions below at an operating voltage range of 4.25 volts (V) to 3.0 V and an operating temperature of 60°C to evaluate cycle characteristics, and the results are shown in FIG. 1.

Charge conditions: 0.33 coulombs (C), 4.25 V constant current/constant voltage (CC/CV), 0.1 C cut-off
Discharge conditions: 0.33 C, 3.0 V, CC

**Claims**

1. An anodeless coating layer comprising a first amorphous carbon and a second amorphous carbon, and having a $D_{50}/D_{10}$ of 3.5 to 10 as indicated by particle size analysis using a particle size analyzer (Mastersizer 3000).

2. The anodeless coating layer according to claim 1, having a $D_{10}$ of 0.06 micrometers (μm) or less.

3. The anodeless coating layer according to claim 1, having a $D_{10}$ of 0.03 μm or greater.

4. The anodeless coating layer according to claim 1, having two peaks between 0.1 μm and 0.5 μm in a graph with an x-axis (μm) for size and a y-axis (%) for volume density derived from particle size analysis using a particle size analyzer (Mastersizer 3000), and satisfying Equation 1 below:

[Equation 1]

$$1.0 \leq \{(x_2-x_1)/x_1\}*(y_1/y_2) \leq 2.0$$

in Equation 1 above, $x_1$ and $x_2$ are x-axis values of the two peaks, respectively, such that $x_1 < x_2$, $y_1$ is a y-axis value of peak $x_1$, and $y_2$ is a y-axis value of peak $x_2$.

5. The anodeless coating layer according to claim 1, wherein a ratio of an average primary particle size of the first amorphous carbon to an average primary particle size of the second amorphous carbon is in a range of 1.1 to 3.3, and a weight ratio of the first amorphous carbon to the second amorphous carbon is in a range of 5 to 20.

6. The anodeless coating layer according to claim 1, wherein the first amorphous carbon has an average primary particle size of 30 to 50 nanometers (nm).

7. The anodeless coating layer according to claim 1, wherein the second amorphous carbon has an average primary particle size of 15 to 25 nm.

8. The anodeless coating layer according to claim 1, wherein the first amorphous carbon has a specific surface area of 10 to 100 square meters per gram ($m^2/g$).

9. The anodeless coating layer according to claim 1, wherein the second amorphous carbon has a specific surface area of 110 to 230 $m^2/g$.

10. The anodeless coating layer according to claim 1, wherein the first amorphous carbon and the second amorphous carbon are each independently at least one selected from the group consisting of carbon black, acetylene black, furnace black, Ketjen black, and graphene.

11. The anodeless coating layer according to claim 1, further comprising metals, metalloid elements, or combinations thereof that form alloys or compounds with lithium.

12. The anodeless coating layer according to claim 11, wherein the metals, metalloid elements, or combinations thereof that form alloys or compounds with lithium are at least one selected from the group consisting of gold (Au), platinum (Pt), palladium (Pd), silicon (Si), silver (Ag), aluminum (Al), bismuth (Bi), tin (Sn) and zinc (Zn).

13. The anodeless coating layer according to claim 11, wherein a weight ratio of a sum of the first amorphous carbon and the second amorphous carbon to the metals, metalloid elements, or combinations thereof that form alloys or compounds with lithium is in a range of 1 to 10.

14. The anodeless coating layer according to claim 11, further comprising a binder.

15. The anodeless coating layer according to claim 14, wherein a weight ratio of a sum of the first amorphous carbon, the second amorphous carbon, and the metals, metalloid elements, or combinations thereof that form alloys or compounds with lithium to the binder is in a range of 5 to 50.

16. An all-solid-state battery comprising a positive electrode, a solid electrolyte layer, an anodeless coating layer, and a negative electrode,
wherein the anodeless coating layer comprises a first amorphous carbon and a second amorphous carbon, and has a $D_{50}/D_{10}$ of 3.5 to 10 as indicated by particle size analysis using a particle size analyzer (Mastersizer 3000).

17. The all-solid-state battery according to claim 16, wherein the solid electrolyte layer comprises a sulfide-based solid electrolyte.

18. The all-solid-state battery according to claim 16, wherein the anodeless coating layer has a porosity of 50 to 80 percent (%).

Fig. 1

Fig. 2

Fig. 3

Fig. 4

Fig. 5

Fig. 6

Fig. 7

Fig. 8

## INTERNATIONAL SEARCH REPORT

International application No.

**PCT/KR2024/012072**

### A. CLASSIFICATION OF SUBJECT MATTER

**H01M 10/0585**(2010.01)i; **H01M 4/13**(2010.01)i; **H01M 4/62**(2006.01)i; **H01M 4/38**(2006.01)i; **H01M 4/40**(2006.01)i; **H01M 10/0562**(2010.01)i; **H01M 10/42**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 10/0585(2010.01); H01M 10/052(2010.01); H01M 10/42(2006.01); H01M 4/13(2010.01); H01M 50/414(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무음극 (anodeless, anode free), 전고체 전지 (all solid battery), 비정질탄소 (amorphous carbon), 평균 입경 (average diameter), 코팅층 (coating layer)

### C. DOCUMENTS CONSIDERED TO BE RELEVANT

| Category* | Citation of document, with indication, where appropriate, of the relevant passages | Relevant to claim No. |
|---|---|---|
| X | KR 10-2020-0052707 A (SAMSUNG ELECTRONICS CO., LTD. et al.) 15 May 2020 (2020-05-15)<br>See claims 1, 12, 16, 17 and 29; and paragraph [0086]. | 1-18 |
| A | KR 10-2022-0020533 A (HYUNDAI MOTOR COMPANY et al.) 21 February 2022 (2022-02-21)<br>See abstract; claim 1; and figure 1. | 1-18 |
| A | KR 10-2023-0027404 A (HYUNDAI MOTOR COMPANY et al.) 28 February 2023 (2023-02-28)<br>See abstract; claim 1; and figure 1. | 1-18 |
| A | KR 10-2023-0072825 A (KOREA INSTITUTE OF INDUSTRIAL TECHNOLOGY) 25 May 2023 (2023-05-25)<br>See abstract; claim 1; and figure 1. | 1-18 |
| A | KR 10-2023-0072827 A (KOREA INSTITUTE OF INDUSTRIAL TECHNOLOGY) 25 May 2023 (2023-05-25)<br>See abstract; claim 1; and figure 1. | 1-18 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 November 2024** | **21 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/012072**

| Patent document cited in search report | | | Publication date (day/month/year) | Patent family member(s) | | | Publication date (day/month/year) |
|---|---|---|---|---|---|---|---|
| KR | 10-2020-0052707 | A | 15 May 2020 | CN | 111162276 | A | 15 May 2020 |
| | | | | CN | 111162276 | B | 23 July 2024 |
| | | | | KR | 10-2682128 | B1 | 08 July 2024 |
| | | | | US | 11349114 | B2 | 31 May 2022 |
| | | | | US | 2020-0144599 | A1 | 07 May 2020 |
| KR | 10-2022-0020533 | A | 21 February 2022 | CN | 114079087 | A | 22 February 2022 |
| | | | | US | 2022-0052343 | A1 | 17 February 2022 |
| KR | 10-2023-0027404 | A | 28 February 2023 | CN | 115708239 | A | 21 February 2023 |
| | | | | US | 2023-0058012 | A1 | 23 February 2023 |
| KR | 10-2023-0072825 | A | 25 May 2023 | KR | 10-2660453 | B1 | 24 April 2024 |
| KR | 10-2023-0072827 | A | 25 May 2023 | KR | 10-2670735 | B1 | 30 May 2024 |

Form PCT/ISA/210 (patent family annex) (July 2022)

**REFERENCES CITED IN THE DESCRIPTION**

**Patent documents cited in the description**

- KR 20230134367